# EUROPEAN PATENT APPLICATION

(11) **EP 1 816 793 A1**
(43) Date of publication of application: **08.08.2007**
(21) Application number: 07002343.7
(22) Date of filing: 02.02.2007
(51) Int. Cl.: H04L 12/28

(54) **Method for uplink bandwidth request and allocation in wireless communication system**

(30) Priority: 02.02.2006 KR 20060010258
(71) Applicant: Samsung Electronics Co., Ltd., Yeongtong-gu Suwon-si, Gyeonggi-do (KR)
(72) Inventor: Lee, Ok-Seon, Yeongtong-gu Suwon-si Gyeonggi-do (KR); Ahn, Chang-Wook, Yeongtong-gu Suwon-si Gyeonggi-do (KR); Yun, Sang-Boh, Yeongtong-gu Suwon-si Gyeonggi-do (KR); Cho, Sung-Hyun, Yeongtong-gu Suwon-si Gyeonggi-do (KR); Park, Won-Hyoung, Yeongtong-gu Suwon-si Gyeonggi-do (KR); Park, Chi-Hyun, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a method for requesting allocation of uplink bandwidth for uplink data transmission and allocating the uplink bandwidth in a wireless communication system. In the method, when a number of uplink bandwidth allocation requests having occurred in a certain interval is different from that of scheduled uplink bandwidth allocation requests, uplink bandwidths are allocated to the extent that the occurred uplink bandwidth allocation requests can be implanted. Herein, the uplink bandwidth allocation requests occur in an MS according to services. Accordingly, as the uplink bandwidth allocation requests increase, uplink bandwidths also increase. However, as the uplink bandwidth allocation requests decrease, uplink bandwidths also decrease.

## Description

### BACKGROUND OF THE INVENTION

### 1. Field of the Invention

The present invention relates to a method for transmitting uplink data in a wireless communication system, and more particularly to a method for requesting allocation of uplink bandwidth for uplink data transmission and allocating the uplink bandwidth.

### 2. Description of the Related Art

Typically, a wireless communication system provides various services using limited bandwidth. To this end, a scheduling scheme for efficiently using bandwidths is necessary. Such a scheduling scheme prevents bandwidths from being unnecessarily allocated, rapidly collects allocated bandwidths, and reallocates the collected bandwidths for a necessary service. Further, the scheduling scheme rapidly allocates bandwidths in response to a bandwidth allocation request.

Various uplink scheduling methods have been proposed in order to allocate bandwidths based on a user request as with a conventional wireless local area network. The representative example thereof includes an Unsolicited Grant Service (UGS), a Real-Time Polling Service (rtPS), an Extended Real-Time Polling Service (ertPS), and a Non-Real-Time Polling Service (nrtPS).

In the UGS, uplink bandwidths of a fixed size are allocated in initial access. Then, these uplink bandwidths are maintained as is until a separate procedure is performed in order to allocate uplink bandwidths. Further, a Mobile Station (MS) requests a Base Station (BS) to allocate uplink bandwidths only when modification of allocated uplink bandwidths is necessary.

In the rtPS, a BS allocates necessary uplink bandwidths in response to a periodic uplink bandwidth allocation request by an MS. Accordingly, a user receives proper bandwidths based on the amount of data to be transmitted by the user, and transmits the data. Accordingly, a periodic unicast bandwidth request opportunity is provided to an MS in real time, and any bandwidth request opportunity of a competing scheme is prohibited from being used by the MS, so that desired operations can be performed without errors.

The ertPS is similar to the rtPS. However, maximum uplink bandwidths are initially allocated, and an MS can modify the allocated uplink bandwidths if the situation requires. That is, when a decrease of uplink bandwidths is required, the MS transmits data by using the decreased uplink bandwidths, and notifies a BS that the uplink bandwidths have been reduced. However, when an increase of uplink bandwidths is required, the MS receives new uplink bandwidths through an uplink bandwidth allocation request.

The nrtPS supports non-real time service regularly requiring data grant burst-type of a variable size such as an FTP. An MS may also use a competition-based bandwidth request opportunity as well as unicast polling, multicast polling, broadcast polling and a unilateral data grant burst-type. The unicast polling periodically provides only a specific MS with an interval for transmitting an uplink bandwidth request message, the multicast polling periodically provides a specific MS group with the interval, and the broadcast polling provides all MSs in a cell with the interval. On this account , the transmission success rate changes, and thus priorities thereof become different.

As described above, for the uplink scheduling scheme in a wireless communication system, an uplink bandwidth allocation request by an MS must be implemented in advance. The example of the uplink bandwidth allocation request may be classified into three schemes.

The first scheme is implemented by polling. A bandwidth request header is transmitted using uplink bandwidths for an uplink bandwidth allocation request in a predetermined polling period.

The second scheme is implemented by piggyback. A grant management sub-header inserted into a general MAC header is used. In other words, information about the amount of uplink bandwidths to be additionally allocated in the current allocated uplink bandwidths is transmitted through the grant management sub-header.

The third scheme is implemented by bandwidth stealing. Uplink bandwidths allocated for data communication are used. In other words, a bandwidth request header is transmitted by partially using the uplink bandwidths allocated for data communication.

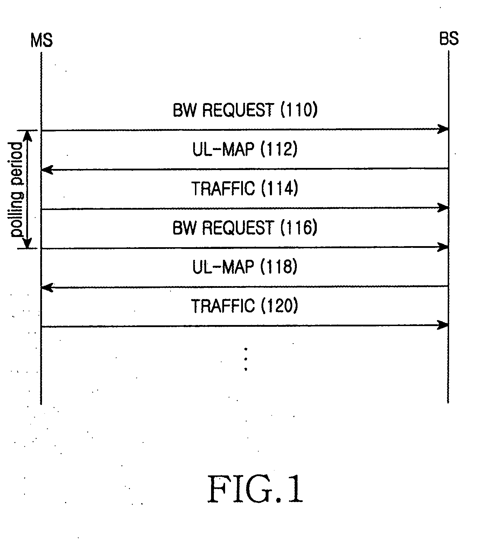

FIG. 1 is a Flow diagram illustrating a conventional signaling procedure for uplink data transmission by periodic polling in a wireless communication system. In FIG. 1, it is assumed that one MS and one BS exist, and the MS performs only one service. If the MS performs a plurality of services, the signaling procedure in FIG. 1 can be performed according to the services.

Referring to FIG 1, in step 110, the MS requests the BS to allocate uplink bandwidths. The allocation request of the uplink bandwidths can be performed through the transmission of a bandwidth request message.

The BS allocates the uplink bandwidths to the MS. The BS allocates the uplink bandwidths to all MSs having requested the allocation of the uplink bandwidths as well as the original MS that requested the allocation. The BS forms an uplink map UL-MAP based on information about the allocation of the uplink bandwidths. In step 112. the BS transmits the UL-MAP to the MS.

The MS receives the UL-MAP, and then confirms the uplink bandwidths allocated to the MS through the UL-MAP. In step 114, the MS transmits uplink data to the BS through the allocated uplink bandwidths.

The afore-described steps are repeated based on a predetermined polling period in steps 116, 118 and 120.

As described above, in order to request the allocation of the uplink bandwidths based on the polling period, the uplink bandwidths to be requested must be allocated in advance. However, if the request does not occur within the polling period, the uplink bandwidths allocated in advance are not used. This may result in wasted uplink bandwidths. Further, if the request occurs before the polling time period, this may cause delay.

On this account , it is necessary to adjust the polling period. If the number of actually occurred uplink bandwidth allocation requests is smaller than that of uplink bandwidth allocation requests predicted in a given polling interval, it is necessary to increase the existing polling period. However, if the number of actually occurred uplink bandwidth allocation requests is greater than that of uplink bandwidth allocation requests estimated in the given polling interval, it is necessary to decrease the existing polling period. In this way, the uplink bandwidth allocation requests can uniformly occur within the polling interval.

However, even when the polling interval is adjusted as described above, performance improvement may deteriorate if the uplink bandwidth allocation requests are irregular.

### SUMMARY OF THE INVENTION

Accordingly, the present invention solves the above-mentioned problems occurring in the prior art, and it is an object of the present invention to provide a method for allocating optimal uplink bandwidths necessary for requesting uplink bandwidth allocation.

It is another object of the present invention to provide a method for requesting allocation of optimal uplink bandwidths required when an MS requests uplink bandwidth allocation according to services.

It is a further object of the present invention to provide a method by which an MS notifies a BS that scheduled uplink bandwidth allocation requests are different from actual uplink bandwidth allocation requests.

It is still another object of the present invention to provide a method by which, when a BS receives a report from an MS, the BS allocates uplink bandwidths so as to enable transmission of actual uplink bandwidth allocation requests, the report representing that scheduled uplink bandwidth allocation requests are different from the actual uplink bandwidth allocation requests.

It is yet another object of the present invention to provide a method for allocating an adaptive polling interval in a polling system requesting uplink bandwidths in order to reduce bandwidth waste and time delay due to uplink bandwidth allocation requests.

In accordance with one aspect of the present invention, there is provided a method for requesting allocation of uplink bandwidths in a wireless communication system in which at least one service is provided by a Mobile Station (MS), the method includes determining if uplink bandwidth allocation requests have occurred for at least one service in a predetermined interval and if such requests can be transmitted through uplink bandwidths currently allocated; if it is determined that the uplink bandwidth allocation requests cannot be transmitted, transmitting information for uplink bandwidth allocation requests to a Base Station (BS); and transmitting the occurred uplink bandwidth allocation requests to the BS through the uplink bandwidths allocated by the BS in response to the information for uplink bandwidth allocation requests.

In accordance with another aspect of the present invention, there is provided a method for allocating uplink bandwidths by a BS in a wireless communication system in which one or more services are provided by an MS, the method includes receiving information for uplink bandwidth allocation requests from the MS; determining if it is necessary to modify uplink bandwidths currently allocated in order to transmit the uplink bandwidth allocation requests with reference to the received information; when it is necessary to modify the currently allocated uplink bandwidths, allocating uplink bandwidths so that the uplink bandwidth allocation requests according to said one or more services can be transmitted; and transmitting the allocated uplink bandwidths to the MS.

### BRIEF DESCRIPTION OF THE DRAWINGS

The above and other objects, features and advantages of the present invention will be more apparent from the following detailed description taken in conjunction with the accompanying drawings, in which:
FIG. 1 is a flow diagram illustrating the conventional signaling procedure for uplink data transmission by periodic polling in a wireless communication system;
FIG. 2 is a timing diagram illustrating the request for uplink bandwidth allocation according to the present invention;
FIG. 3 is a flow chart illustrating the control flow performed by a Mobile Station (MS) in order to receive uplink bandwidths according to the present invention;
FIG. 4 is a flow chart illustrating the control flow performed by a BS in order to allocate uplink bandwidths according to the present invention;
FIGs. 5A and 5B are block diagrams showing transmission information about uplink bandwidth allocation requests through a bandwidth request header;
FIGs. 6A and 6B are block diagrams showing the report indicating the number of services (CIDs) to be polled with BR Change Information (BCI); and
FIGs. 7a to 7c are block diagrams showing the addition of a new sub-header for transmitting BR information.

### DETAILED DESCRIPTION OF THE PREFERRED EMBODIMENTS

Preferred embodiments of the present invention will be described in detail herein below with reference to the accompanying drawings. In the following detailed description, known functions and configurations incorporated herein will be omitted when it may obscure the subject matter of the present invention.

In the present invention, if the number of uplink bandwidth allocation requests having occurred in a certain interval is different from that of uplink bandwidth allocation requests scheduled during a polling period, uplink bandwidths necessary for the previous uplink bandwidth allocation requests are allocated. The number of previous uplink bandwidth allocation requests corresponds to the number of services requiring the transmission of uplink data from among support services. The number of scheduled uplink bandwidth allocation requests denotes the number of uplink bandwidth allocation requests estimated to occur in an upcoming polling period when considering polling periods predetermined according to services.

The uplink bandwidth allocation requests are implemented according to services performed by an MS. Accordingly, the MS determines if uplink data to be transmitted comport to the services, and requests the allocation of uplink bandwidths for the transmission of the uplink data according to the requested services.

In order to request the allocation of the uplink bandwidths, it is necessary to allocate separate uplink bandwidths for transmitting an uplink bandwidth allocation request message to a BS. This implies that uplink bandwidths necessary for the uplink bandwidth allocation request must be determined by the number of the services in which the uplink data to be transmitted exists. That is, if the number of the requested services increases, the uplink bandwidths for the uplink bandwidth allocation request must also increase. However, if the number of the requested services decreases, the uplink bandwidths for the uplink bandwidth allocation request must also decrease.

To this end, the MS confirms the number of uplink bandwidth allocation requests having occurred in a certain interval, i.e. the number of services including uplink data to be transmitted. Further, the MS determines if the number of previously occurred uplink bandwidth allocation requests coincides with the number of uplink bandwidth allocation requests scheduled by a polling period. As a result of the determination, if the two numbers are different, the MS sends the number of the previous uplink bandwidth allocation requests to the BS.

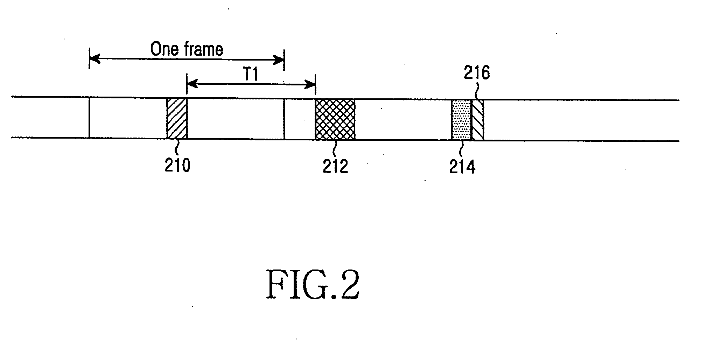

If the number of the previous uplink bandwidth allocation requests is smaller than that of the scheduled uplink bandwidth allocation requests, the BS decreases uplink bandwidths currently allocated for the uplink bandwidth allocation requests. Otherwise, the BS increases the uplink bandwidths currently allocated for the uplink bandwidth allocation requests. Further, the BS provides the MS with the modified uplink bandwidths. FIG. 2 is a timing diagram illustrating the request uplink bandwidth allocation according to the present invention.Referring to FIG. 2, the MS transmits information on uplink bandwidth allocation requests to the BS at a certain point in time (reference numeral 210). The transmission of the information can be performed by a transmission scheme based on the polling period and a transmission scheme not based on the polling period. The transmission scheme not based on the polling period can be classified into a case where a message transmitted from the MS having a corresponding CID (service identifier) to the BS exists, and a case where the message does not exist.

In the transmission scheme based on the polling period, information about uplink bandwidth allocation requests in a subsequent frame is transmitted through an uplink request message transmitted at the polling time point based on the polling period predetermined according to services. This may cause a delay because waiting time is required until a subsequent polling time point based on the polling period is reached.

In the transmission scheme not based on the polling period, at the time when the transmission of the information about uplink bandwidth allocation requests is required, the information can be transmitted without any delay.

First, in the case where the afore-described message exists, it is possible to transmit the information about uplink bandwidth allocation requests by using a control message or a data transmission interval. When the control message is used, it is possible to transmit the information by using a predetermined area of an existing control message, or a newly defined control message. When using the data transmission interval, the MS transmits the information by using extra bandwidths of uplink bandwidths for data transmission, or uplink bandwidths within a range, in which data transmission is not disturbed, through temporary MCS level adjustment, etc.

However, when the afore-described message does not exist, the control message or the data transmission interval cannot be utilized. In such a case, it is possible to transmit the information about uplink bandwidth allocation requests by using a slot not being used by any MSs with reference to a UL-MAP. If such a slot does not exist, the MS transmits the information about uplink bandwidth allocation requests by using broadcast polling or random access interval with reference to the UL-MAP. This process continues in each frame until the transmission of the information about uplink bandwidth allocation requests succeeds, but it is cancelled when the given time of a timer is reached. Further, it can also be transmitted when a predetermined polling period is reached.

Accordingly, the point in time at which the information about uplink bandwidth allocation requests is transmitted can be determined by one of the schemes described above. The information about uplink bandwidth allocation requests includes the number of services in which uplink bandwidth allocation has been requested in a predetermined interval, i.e. the number of uplink bandwidth allocation requests. To this end, the MS counts the number of services in which the transmission of uplink data is required in the predetermined interval. The predetermined interval may include a polling interval, or an interval between time points at which the information about uplink bandwidth allocation requests is transmitted.

The BS receives the information about uplink bandwidth allocation requests transmitted from the MS, and allocates uplink bandwidths in consideration of the number of the previous uplink bandwidth allocation requests and the number of the scheduled uplink bandwidth allocation requests included in the information about uplink bandwidth allocation requests. The allocated uplink bandwidths are uplink bandwidths to be used when the MS requests uplink bandwidth allocation.

The BS forms the UL-MAP by using uplink bandwidths allocated for uplink bandwidth allocation requests, and uplink bandwidths allocated for transmitting uplink data according to services (not shown in FIG. 2). The uplink bandwidths for transmitting uplink data according to services are allocated by the received uplink bandwidth allocation requests. The BS transmits the UL-MAP to the MS.

The MS receives the UL-MAP from the BS, and then confirms uplink bandwidths allocated to the MS from the received UL-MAP. The allocated uplink bandwidths include the uplink bandwidths allocated for uplink bandwidth allocation requests, and the uplink bandwidths allocated for transmitting uplink data according to services. The MS transmits uplink data according to services by using the allocated uplink bandwidths. Further, using the allocated uplink bandwidths (reference numeral 212), the MS transmits uplink bandwidth allocation requests corresponding to services transporting uplink data.

There is no consideration for a service in which uplink data to be transmitted has been generated between the transmission time point of the information about uplink bandwidth allocation requests and the transmission time point T1 of the uplink bandwidth allocation requests. Accordingly, at T1, uplink bandwidth allocation requests corresponding to the service in which the uplink data has been generated are transmitted using uplink bandwidths allocated for broadcast polling or random access. When the transmission of the uplink bandwidth allocation requests ends in a failure, uplink bandwidth allocation can be requested using uplink bandwidths allocated in a subsequent polling period.

The priority of a corresponding service determines the transmission time point of the uplink bandwidth allocation requests having occurred at T1. For example, the uplink bandwidths (reference numeral 214) allocated for broadcast polling are used for a service with a high priority. The uplink bandwidths (reference numeral 212) allocated for random access are used for a service with a subsequent priority. Further, uplink bandwidths allocated in a subsequent polling period are used for a service with the lowest priority. If an MS with a corresponding CID has an uplink transmission opportunity corresponding to another CID before the polling time point based on the polling period, the MS can request the allocation of uplink bandwidths through a piggyback scheme.

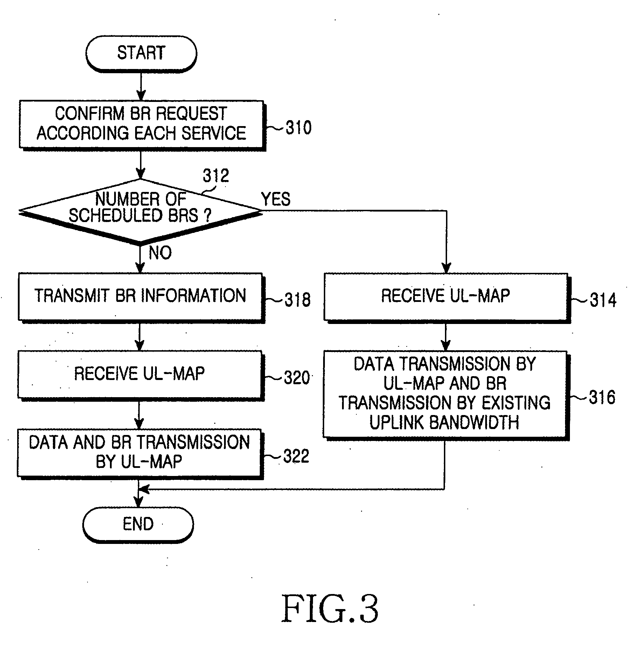

FIG. 3 is a flow chart illustrating the control flow performed by the MS in order to receive uplink bandwidths according to the present invention. Referring to FIG. 3, in step 310, the MS determines if Bandwidth Requests (BRs) have occurred according to services (CIDs) in a predetermined interval. In step 312, the MS determines if the number of occurred BRs coincides with the number of scheduled BRs.

If the number of occurred BRs coincides with the number of the scheduled BRs, the MS receives the UL-MAP from the BS in step 314. In step 316, the MS transmits uplink data to the BS by using the uplink bandwidth allocated by the UL-MAP. Further, the MS transmits a BR to the BS by using the uplink bandwidth allocated in advance for the transmission of the BR. The uplink bandwidth allocated in advance may also be confirmed through the UL-MAP.

If the number of occurred BRs does not coincide with the number of scheduled BRs, the MS performs a procedure for modifying the uplink bandwidth allocated in advance. That is, in step 318, the MS transmits BR information. The BR information reports that it is necessary to modify the uplink bandwidth currently allocated for the transmission of the BR, and includes the number of occurred BRs. In step 320, the MS receives the UL-MAP from the BS. In step 322, the MS transmits uplink data to the BS by using the uplink bandwidth allocated by the UL-MAP. Further, the MS transmits a BR corresponding to each service, which requires the allocation of uplink bandwidths, by using the uplink bandwidth allocated by the UL-MAP.

As described above, FIG. 3 illustrates an operation performed by the MS in a one-time polling period. However, it should be noted that the MS can repeatedly perform the operation of FIG. 3 in each polling period.

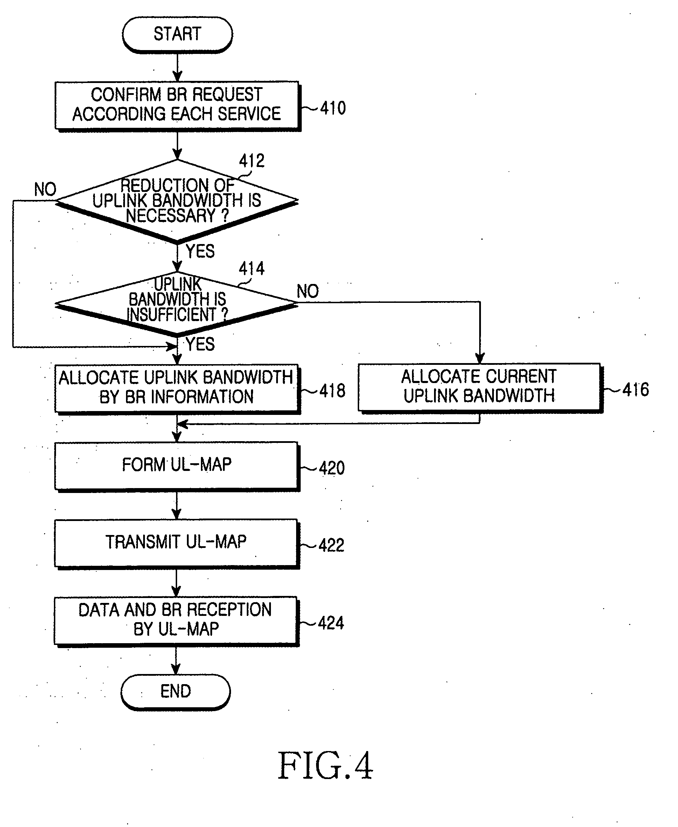

FIG. 4 is a flow chart illustrating the control flow performed by the BS in order to allocate uplink bandwidths according to the present invention. Referring to FIG. 4, in step 410, the BS receives the BR information from the MS. In step 412, the BS determines if the decrease of uplink bandwidths for BR transmission is necessary. If the number of occurred BRs is greater than the number of scheduled BRs through the BR information, the BS determines that the decrease of the uplink bandwidths for BR transmission is necessary.

In such a case, in step 414 the BS determines if uplink bandwidths currently managed by the BS in order to transmit the BRs are insufficient. If the BS determines that the uplink bandwidths are insufficient, the BS allocates uplink bandwidths for BR transmission according to the BR information in step 418. That is, the BS allocates decreased uplink bandwidths as compared to the currently allocated uplink bandwidths in order to transmit BRs. However, if the BS determines that the increase of the uplink bandwidths for BR transmission is necessary, in step 418 the BS allocates the increased uplink bandwidths as compared to the currently allocated uplink bandwidths in order to transmit the BRs. The uplink bandwidths can be allocated according to services.

If the BS determines that the uplink bandwidths are not insufficient, in step 416 the BS does not modify the currently allocated uplink bandwidths in order to transmit the BRs. That is, the BS maintains the current uplink bandwidths.

If the allocation of the uplink bandwidths is completed, in step 420 the BS forms the UL-MAP by using the allocated uplink bandwidths. In step 422, the BS transmits the UL-MAP to the MS.

In step 424, the BS receives uplink data from the MS by using the uplink bandwidths allocated by the UL-MAP according to services. Further, the BS receives BRs transmitted according to services from the MS by using the uplink bandwidths allocated by the UL-MAP, or the previously allocated uplink bandwidths.

In the above description, it is assumed that the BR information is transmitted separately from the BR. If the MS transmits the BR information through the BR, it should be noted that the BS can repeatedly perform the afore-described operation by the BR received from the MS. Further, it should also be noted that the BS repeatedly performs the afore-described operation in each polling period until all services being performed with a corresponding MS are terminated.

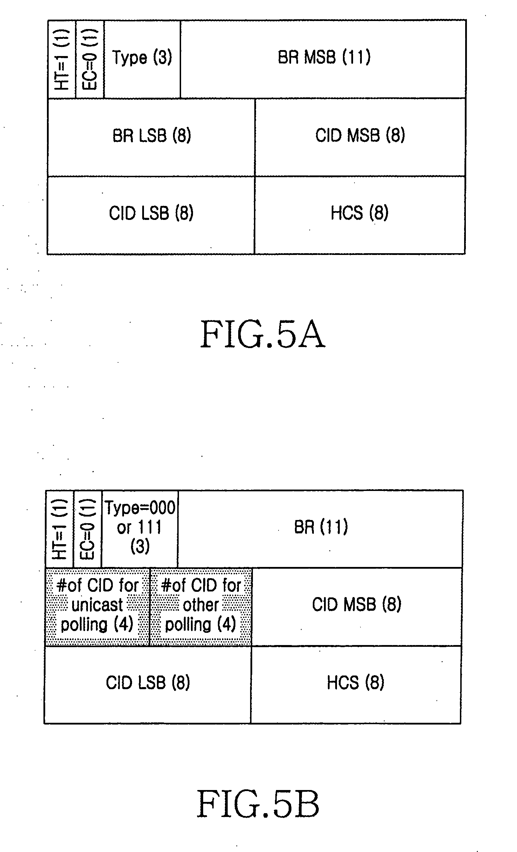

FIGs. 5A and 5B are block diagrams showing transmission information about uplink bandwidth allocation requests through a bandwidth request header, i.e. which illustrate an example of reporting the number of services (CIDs) intended for reception of an uplink for the transmission of a bandwidth request header in a subsequent uplink.

Referring to FIG. 5A it can be seen that, considering various types of existing bandwidth request headers, 11 bits are allocated for a BR, and 8 bits are used for another purpose. However, in an incremental type and a BR aggregate type, all 16 bits are used for a BR. Accordingly, the present invention utilizes 8 bits of the 16 bits. Such an example is illustrated in FIG. 5B.

As it can be seen from FIG. 5B, there is an allocated area capable of separately indicating the number of unicast pollings and the number of other pollings. This causes Quality of Service (QoS) to be reflected in uplink scheduling. The other pollings may include multicast polling, broadcast polling, etc.

Consequently, it is possible to save uplink bandwidth for all 6 bytes with respect to a bandwidth request header of 6 bytes.

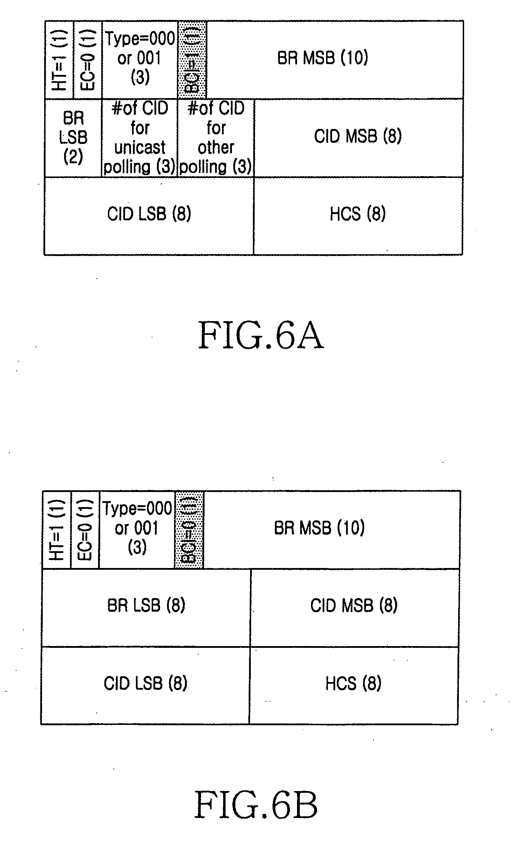

FIGs. 6A and 6B are block diagrams showing the report indicating the number of services (CIDs) to be polled with BR Change Information (BCI). FIG. 6A illustrates an example of using all 18 bits for a BR field instead of indicating the number of CIDs to be polled, in which a BCI bit is set to zero. FIG. 6B illustrates an example of separately indicating the number of CIDs to be polled, in which a BCI bit is set to 1.

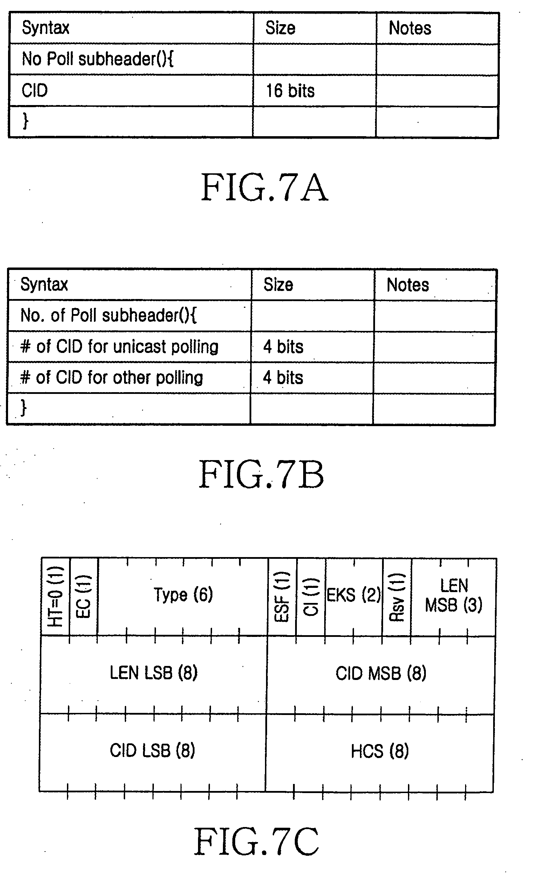

FIGs. 7A to 7C are block diagrams showing the addition of adding a new sub-header for transmitting BR information. In FIG. 7A, CIDs not requiring polling are reported. In this way, it is possible to obtain a saving effect of 4 bytes with respect to a bandwidth request header of 6 bytes. In FIG. 7B, the number of CIDs requiring polling is reported. Further, the number of unicast pollings and the number of other pollings are separately indicated, so that it is possible to cause QoS to be reflected in uplink scheduling. In this way, it is possible to obtain a saving effect of 5 bytes with respect to a bandwidth request header of six (6) bytes. For FIGs. 7A and 7B, it is necessary to modify the indication scheme of a type field in a general MAC header. In FIG. 7C, a reserved bit of one bit is utilized as a polling sub-header bit. When the reserved bit has a value of 1, it denotes the presence of a polling sub-header. When the reserved bit has a value of 0, it denotes the absence a polling sub-header. Herein, the reserved bit is shifted before an ESF field. As a result, the type field includes seven (7) bits.

According to the present invention as described above, adaptability is applied to an existing simple scheme, so that it is possible to efficiently cope with temporary change in uplink bandwidth allocation requests or irregular uplink bandwidth allocation requests. Further, information about uplink bandwidth allocation requests occurring before a polling time point based on a polling period is transmitted to a BS, so that it is possible to shorten time required for requesting uplink bandwidths. Furthermore, when there are no uplink bandwidth allocation requests to be transmitted at a polling time point, uplink bandwidths necessary for requesting uplink bandwidth allocation are not allocated, which results in prevention of wasted uplink bandwidths.

Although the present invention has been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for requesting allocation of uplink bandwidths in a wireless communication system in which at least one service is provided by a Mobile Station (MS), the method comprising the steps of:
determining if uplink bandwidth allocation requests having occurred for said at least one service in a predetermined interval can be transmitted through uplink bandwidths currently allocated to transmit the uplink bandwidth allocation requests;
transmitting information for uplink bandwidth allocation requests to a Base Station (BS) if it is determined that the uplink bandwidth allocation requests cannot be transmitted; and
transmitting the occurred uplink bandwidth allocation requests to the BS through the uplink bandwidths allocated by the BS in response to the information for uplink bandwidth allocation requests.

2. The method as claimed in claim 1, wherein, if a number of the occurred uplink bandwidth allocation requests in the predetermined interval does not coincide with a number of scheduled uplink bandwidth allocation requests, the MS determines that the occurred uplink bandwidth allocation requests cannot be transmitted through the currently allocated uplink bandwidths, or uplink bandwidths are wasted.

3. The method as claimed in claim 2, wherein the information for uplink bandwidth allocation requests includes the number of occurred uplink bandwidth allocation requests.

4. The method as claimed in claim 3, wherein the information for uplink bandwidth allocation requests is transmitted when the uplink bandwidth allocation is requested.

5. The method as claimed in claim 3, wherein the information for uplink bandwidth allocation requests is transmitted by utilizing a control message.

6. The method as claimed in claim 3, wherein the information for uplink bandwidth allocation requests is transmitted by utilizing a data transmission interval.

7. The method as claimed in claim 3, wherein the information for uplink bandwidth allocation requests is transmitted through a slot not used by a UL-MAP.

8. A method for allocating uplink bandwidths by a Base Station (BS) in a wireless communication system in which one or more services are provided by a Mobile Station (MS), the method comprising the steps of:
receiving information for uplink bandwidth allocation requests from the MS;
determining if it is necessary to modify uplink bandwidths currently allocated in order to transmit the uplink bandwidth allocation requests with reference to the received information;
allocating uplink bandwidths so that the uplink bandwidth allocation requests according to said one or more services can be transmitted when it is necessary to modify the currently allocated uplink bandwidths; and
transmitting the allocated uplink bandwidths to the MS.

9. The method as claimed in claim 8, wherein the information for uplink bandwidth allocation requests includes a number of uplink bandwidth allocation requests having occurred for said one or more services.

10. The method as claimed in claim 9, wherein the information for uplink bandwidth allocation requests is transmitted when the uplink bandwidth allocation is requested.

11. The method as claimed in claim 9, wherein the information for uplink bandwidth allocation requests is transmitted by utilizing a control message.

12. The method as claimed in claim 9, wherein the information for uplink bandwidth allocation requests is transmitted by utilizing a data transmission interval.

13. The method as claimed in claim 9, wherein the information for uplink bandwidth allocation requests is transmitted through a slot not used by a UL-MAP.

14. The method as claimed in claim 10, wherein the BS increases uplink bandwidths currently allocated in order to transmit the uplink bandwidth allocation requests if a number of occurred uplink bandwidth allocation requests is greater than a number of scheduled uplink bandwidth allocation requests, and decreases the uplink bandwidths currently allocated in order to transmit the uplink bandwidth allocation requests if the number of the occurred uplink bandwidth allocation requests is smaller than the number of the scheduled uplink bandwidth allocation requests.
